(19) **Europäisches Patentamt**

**European Patent Office**

**Office européen des brevets**

(11) **EP 0 894 382 B1**

(12) **EUROPEAN PATENT SPECIFICATION**

(45) Date of publication and mention
of the grant of the patent:
**06.04.2005 Bulletin 2005/14**

(21) Application number: **97907524.9**

(22) Date of filing: **07.03.1997**

(51) Int Cl.⁷: $H04L\ 12/56$

(86) International application number:
**PCT/SE1997/000390**

(87) International publication number:
**WO 1997/040607 (30.10.1997 Gazette 1997/46)**

(54) **ARRANGEMENT AND METHOD FOR ALLOCATION OF BANDWIDTH AND BUFFER SPACE IN AN ATM NETWORK**

VORRICHTUNG UND VERFAHREN ZUR ZUWEISUNG VON BANDBREITE UND PUFFERRAUM IN EINEM ATM-NETZ

SYSTEME ET PROCEDE D'ATTRIBUTION DE LARGEUR DE BANDE ET D'ESPACE TAMPON DANS UN RESEAU MTA

(84) Designated Contracting States:
**CH DE DK FI FR GB LI NL**

(30) Priority: **24.04.1996 SE 9601560**

(43) Date of publication of application:
**03.02.1999 Bulletin 1999/05**

(73) Proprietor: **TELIA AB**
**123 86 Farsta (SE)**

(72) Inventors:
• **PERS, Olle**
  **S-132 42 Saltsjö-Boo (SE)**
• **BJÖRKMAN, Nils**
  **S-118 04 Stockholm (SE)**
• **MIAH, Aziz**
  **S-127 31 Skärholmen (SE)**
• **LATOUR-HENNER, Alexander**
  **S-132 22 Saltsjö-Boo (SE)**

(74) Representative: **Akerman, Marten Lennart**
**Albihns Malmö AB**
**Box 4289**
**203 14 Malmö (SE)**

(56) References cited:
**EP-A- 0 454 364**    **EP-A- 0 535 860**
**EP-A- 0 702 473**    **US-A- 5 434 848**

**EP 0 894 382 B1**

### Description

The present invention relates to a method and apparatus for controlling traffic in an asynchronous transfer network (ATM) and, more particularly, a method and apparatus for the allocation of bandwidth and buffer space in an ATM network.

The traffic level in an ATM network varies with time in dependence on subscriber utilisation of the network. The effects of variable traffic utilisation can be controlled, by controlling the available buffer space and bandwidth allocated to the various traffic flows through the network.

In this context, it should be remembered that ATM is a wideband, low disparity, packet-like switching and multiplexing concept that allows flexible use of available transmission bandwidth. ATM can operate at any data rate. Each data packet consists of five bytes of header field, plus 48 bytes for user data. The header contains data that identifies the related cell, a logical address that identifies routing, forward error correcting bits, plus bits for priority handling and network management functions. Forward error correction is only used for the header, since it is assumed that the network medium will not degrade the error rate below an acceptable level. All the cells of a virtual connection follow the same path through the network, this path is determined during call set-up. There are no fixed time slots in the system so that any user can access the transmission medium whenever an empty cell is available. The cell stream is continuous and without gaps. The position of cells associated with a particular virtual connection is random and depends upon the traffic level in the network. Cells produced by different streams to the ATM network are stored in queues awaiting cell assignment. Since a cell is only accepted when the necessary bandwidth is available, there is a finite probability of queue overflow, resulting in cell loss. It is, therefore, of the utmost importance to provide methods for controlling the balance between available buffer space and available bandwidth.

The smaller the available bandwidth that is allocated to a given traffic stream, the greater the buffer space required to avoid cell loss in the network. There are a number of problems associated with dimensioning traffic in an ATM network, for example, how to characterise traffic so that the result of the characterisation can be used in network resource allocation and how to simultaneously optimally allocate available bandwidth and buffer space. At the present time traffic flows are characterised by means of a variety of statistical models.

The document EP 0 535 860 discloses a congestion control for high speed packet networks. Congestion in a high speed connection oriented packet network carrying bursty data and real time service is avoided by an in-call negotiation scheme for reserving bandwidth for real time calls and reserving buffer capacity for bursty call. The routing function is carried out in a centralised call controller in each switch in the network. The reservation function is carried out in separate trunk controllers, each associated with one of the trunks connected to the switch. The centralised call controller determines which of its outgoing trunks has available bandwidth to accommodate a call. The call routing is set up so that the call is directed through that trunk and the peak bandwidth requirement of the call is allocated on that output trunk for the duration of the call.

On the other hand, in the present invention bandwidth and buffer resources are allocated dynamically on the basis of real time traffic measurements and based on a functional relationship between buffer space and bandwidth.

The technical problem which is solved by the present invention is that of the allocation of available bandwidth and buffer space in a manner-which is more efficient than that used at the present time and in a manner based on actual traffic flow in the network rather than a statistical model.

The present invention is based on the surprising discovery that different ATM traffic sources generate traffic flows which are characterised by the same functional relationship between buffer space and bandwidth, i.e. the same type of graph relating bandwidth and buffer space applies to different traffic sources. The method and apparatus of the present invention provide means for determining the optimal operating points for both bandwidth and buffer space. It is also possible to determine certain additional tolerance parameters from the optimal operating point. These parameters are needed for use in the control of traffic sources connected to the ATM network. Thus, the present invention provides a method and apparatus for the dynamic allocation of bandwidth and buffer resources in an ATM network on the basis of real time traffic measurements.

The equipment for implementing the present invention can be physically located in the operations support system of a wideband network, or as an internal function in an ATM-switch. The invention thus permits the more efficient and effective utilisation of available network resources.

A number of techniques are known for the allocation of bandwidth in ATM networks which do not address the allocation of buffer space. Other techniques for the allocation of bandwidth and buffer space are based on statistical models for incoming traffic flows, or the description of each traffic source by parameter pairs such as cell rate and cell delay variation (CDV), which are not optimised for the available combined buffer space and bandwidth resource.

The invention provides an apparatus according to claim 1 and a method according to claim 12.

According to a first aspect of the present invention, there is provided in an ATM network carrying a plurality of traffic streams, each traffic stream having a traffic level associated therewith, an apparatus for allocating bandwidth and buffer space to each of said traffic streams characterised in that there is provided, processor means for determining values for buffer space and bandwidth to be assigned to each traffic stream on call set up, and control means for assigning bandwidth and buffer space to each traffic stream in dependence on signals received from said processor means, and in that said processor means operate on a predetermined functional relationship between bandwidth and buffer space, together with current values for total available buffer space and bandwidth in said ATM network, to provide substantially optimised values of bandwidth and buffer space to be assigned to a traffic source on call set up.

Preferably, said control means assigns buffer space and bandwidth to said traffic streams on a dynamic basis determined by variations in traffic level received by the ATM network from said different traffic streams.

Said processor means may calculate tolerance parameters used to control traffic behaviour in traffic sources connected to said ATM network.

Preferably, for each traffic stream, bandwidth and buffer capacity are optimised for the current total traffic level carried by said ATM network.

Said predetermined functional relationship may be determined from measurements made by a leaky bucket counter located in an ATM control node in said ATM network.

Said predetermined functional relationship may be measured by:

- measuring, for each ATM traffic stream, a cell delay variation (CDV) tolerance for a plurality of cell rates by means of said leaky bucket counter; and

- multiplying said CDV tolerance by a corresponding cell rate to derive a corresponding buffer requirement.

Each of said plurality of traffic streams may have a leaky bucket counter connected thereto and said predetermined functional relationship may be determined by measurements performed, and processed, in parallel on said plurality of traffic streams.

Alternatively, each of said plurality of traffic streams may be connected to a single leaky bucket counter and said predetermined functional relationship may be determined by measurements performed, and processed, sequentially on each of said plurality of traffic streams.

Said processor means may be adapted to determine optimal values for bandwidth and buffer space to be assigned to each of said plurality of traffic streams by determining an intersection between a graph of said predetermined functional relationship between bandwidth and buffer space, and a straight line graph intersecting the origin and a point $(x_{max}, y_{max})$, where $x_{max}$, $y_{max}$ are the maximum available buffer space and bandwidth for an ATM link to which said traffic stream is connected.

If said ATM network utilises statistical multiplexing, then said processor means may allocate, between said plurality of traffic streams, more bandwidth and buffer space than actually exist within said network.

For each of said plurality of traffic streams said processor may configure a UPC and derive a CDV tolerance parameter by dividing an optimal value for buffer space by a corresponding bandwidth, so that rejection of cells by said UPC are minimised.

According to a second aspect of the present invention, there is provided, an ATM network characterised in that said ATM network includes an apparatus as defined in the first aspect of the present invention.

According to a third aspect of the present invention, there is provided, in an ATM network carrying a plurality of traffic streams, each traffic stream having a traffic level associated therewith, a method of allocating buffer space and bandwidth, on call set up, to each traffic stream of said plurality of traffic streams characterised by deriving, from a predetermined function relating bandwidth and buffer space and current values for total available buffer space and bandwidth in said ATM link, substantially optimised values for the buffer space and bandwidth to be assigned to said each traffic stream, and assigning said substantially optimised values for bandwidth and buffer space to each traffic stream.

Buffer space and bandwidth may be assigned to said traffic streams on a dynamic basis determined by variations in traffic level received by the ATM network from said different traffic streams.

Tolerance parameters may be determined for controlling traffic behaviour in traffic sources connected to said ATM network and said tolerance values may be assigned to said traffic sources.

Bandwidth and buffer capacity may be optimised for each traffic stream of said plurality of traffic streams for the current total traffic level carried by said ATM network.

Said predetermined functional relationship may be determined from measurements made by a leaky bucket counter located in an ATM control node in said ATM network.

The following steps for measuring said predetermined functional relationship may be implemented:

- measuring, for each ATM traffic stream, a cell delay variation (CDV) tolerance for a plurality of cell speeds by means of said leaky bucket counter; and

- multiplying said CDV tolerance by a corresponding cell speed to derive a corresponding buffer requirement.

A leaky bucket counter may be assigned to each of said plurality of traffic streams and said predetermined functional relationship may be determined by simultaneously performing measurements on each of said plurality of traffic streams.

Said predetermined functional relationship may be sequentially determined for each of said plurality of traffic streams by measurements performed sequentially on each of said plurality of traffic streams.

Optimal values for bandwidth and buffer space to be assigned to each of said plurality of traffic streams may be determined by determining an intersection between a graph of said predetermined functional relationship between bandwidth and buffer space, and a straight line graph intersecting the origin and a point ($x_{max}$, $y_{max}$), where $x_{max}$, $y_{max}$ are the maximum available buffer space and bandwidth for an ATM link to which said traffic stream is connected.

Said ATM network may utilise statistical multiplexing and more bandwidth and buffer space than actually exist within said ATM network may be allocated between said plurality of traffic streams.

For each of said plurality of traffic streams, a UPC may be configured and a CDV tolerance parameter derived by dividing an optimal value for buffer space by a corresponding bandwidth, so that rejection of cells by said UPC is minimised.

Embodiments of the invention will now be described, by way of example, with reference to the accompanying drawings, in which:

Figure 1 illustrates an ATM system fed by traffic from several sources.

Figure 2 illustrates, in block schematic form, apparatus, according to the present invention, for allocation of bandwidth and buffer space.

Figure 3 is a graph of the functional relationship between bandwidth and buffer space utilised by the present invention.

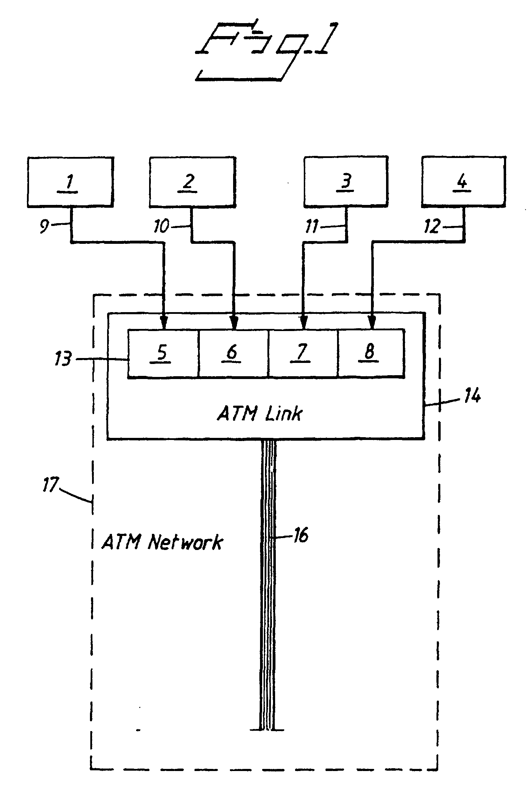

Turning first to Figure 1, there is shown, in block schematic form, a typical ATM link 14, which receives traffic from a number of sources 1 to 4. The ATM link 14 is part of an ATM network 17 and it transmits ATM traffic to the ATM network 17, over optical fibre 16. The ATM link has a buffer 13, in which buffer space 5 to 8 can be assigned to the traffic sources 1 to 4. Traffic is received over lines 9 to 12 from the traffic sources 1 to 4. The lower the available bandwidth, the greater the requirement for buffer space. If insufficient buffer space is assigned to a given traffic source, ATM cells will be lost in the network. The problem addressed by the present invention is that of how to allocate buffer space and bandwidth, within the constraints of the total buffer space and bandwidth available to the ATM link, to the various traffic sources connected to the ATM link, in an optimal manner, so that errors due to cell loss are minimised, or eliminated.

The present invention incorporates three elements into a technique for providing optimal utilisation of the buffer space and bandwidth resources available in an ATM network. The first element of the invention is based on the surprising discovery that many traffic sources in an ATM network generate traffic streams which can be characterised by a single functional relationship, or graph, which describes the requirement for buffer space as a function of bandwidth. The second element of the invention is the determination of the optimal values for bandwidth and buffer space, for each traffic stream, under a given set of system constraints, i.e. total bandwidth and buffer space available for the ATM link. The third element of the present invention is the determination, from the optimal operating point, of certain tolerance parameters for each traffic source, which tolerance parameters are needed for controlling the traffic behaviour of traffic sources connected to the ATM network.

The technique of the present invention is based on actual observations of traffic flow, as opposed to prior art techniques which are based on resource allocation on the basis of a statistical model of incoming traffic streams, or the description of each traffic stream by parameter pairs, e.g. call rate and CDV tolerance, which parameters are not optimised in terms of the available buffer space and bandwidth.

The traffic level for an ATM traffic stream fluctuates with time. These fluctuations can be handled by controlling the bandwidth and buffer space assigned to all the traffic streams received by an ATM link. The smaller the bandwidth that is allocated to a given traffic stream, the more buffer space that is required to guarantee that no cells are lost in the ATM network.

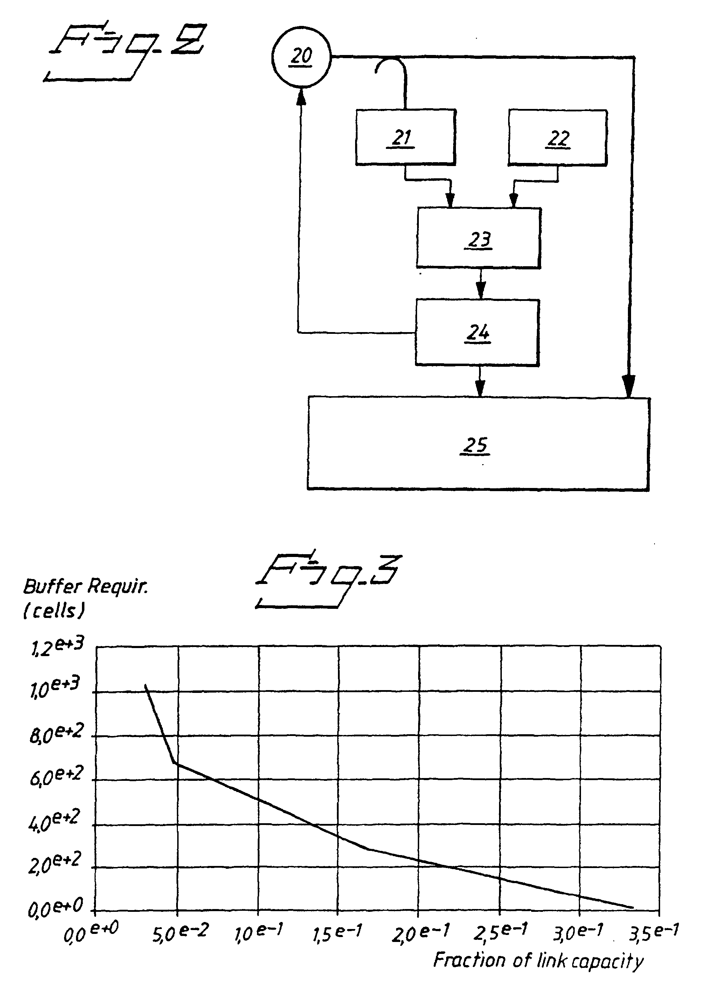

Until now, it has been assumed that ATM traffic can only be characterised by means of statistical models. However, it has now been discovered, by the inventor, that most equipments generating ATM traffic generate a traffic stream which can be characterised by a graph which defines a functional relationship between the requirement for buffer space and bandwidth. This graph, illustrated in Figure 3, shows buffer space, measured in terms of cell numbers, plotted against bandwidth, expressed as a fraction of link capacity.

The graph, of Figure 3, can be compiled from traffic measurement in a number of different ways. For example, the traffic characteristic can be monitored by means of a "leaky-bucket" counter. That is to say, a counter that is incremented by the incoming traffic flow, in cells, and simultaneously decremented at a constant rate. Such counters are normally used in ATM-equipments to control the specific cell speed to that which is indicated in a traffic contract. Data for the graph can be collected by:

- measuring the "CDV-tolerance" of the source for a number of cell speeds with a "leaky bucket" counter; and
- multiplying the value of the "CDV-tolerance" by the cell speed in order to obtain the traffic source's requirement for buffer space.

Data can be collected either by using several counters operating in parallel, i.e. taking measurements from several traffic sources simultaneously, or by using a single counter to perform sequential measurements on the different traffic sources.

A given link has two constrained resources, buffer space and bandwidth. Maximum utilisation of these resources can be achieved as set out below. The buffer space for an ATM Link is set at $y_{max}$ cell places and the bandwidth of the link is set to $x_{max}$ cells per second. The optimal point for a given source is obtained as the intersection between the graph of Figure 3 and a straight line , see equation (1) below, from the origin to the coordinates ($x_{max}$, $y_{max}$).

$$y = x \cdot \frac{y_{max}}{x_{max}} \qquad (1)$$

This point indicates the lowest bandwidth that need be allocated to a given traffic source, and the buffer space, which is related to that bandwidth.

If $y_{max}$ is the physical maximal size of the buffer space, this method guarantees zero cell loss, on the assumption that the behaviour of the source does not change. This method also permits another parameter to be checked, namely, cell delay variation. The lower the value to which $y_{max}$ is set, the lower the cell delay variation the network can guarantee.

In its simplest variation, this method indicates the allocation of buffer space and bandwidth needed to achieve zero cell loss and maximal cell delay variation. Of course, if it is intended to use statistical multiplexing, it is possible to allocate more bandwidth and buffer space resources than are actual available in the system. This can be allowed for by introducing an allocation factor, $A_f$, see equation (2) below:

$$y = A_f \cdot x \cdot \frac{y_{max}}{x_{max}} \qquad (2)$$

where $A_f$ is a function of the distribution of $y_{optimal}$ over time.

$$A_f \approx f\ (P\{y_{optimal}(t) = \lambda,\ \lambda \in R\}) \qquad (3)$$

Where P is the probability of the optimal buffer allocation over time being equal to an arbitrary constant, $\lambda$, contained in the real domain R. This distribution can be estimated by repeated observation of the traffic in question.

Associated with the establishment of a connection, a usage parameter control (UPC) must be configured. $x_{optimal}$ is set as the bandwidth parameter for the UPC. The "CDV tolerance" parameter for the UPC is obtained by dividing the value of the optimal value for buffer space by its corresponding bandwidth.

$$UPC\ Cell\ Rate = x_{optimal}$$
$$UPC\ CDV\ Tolerance = \frac{y_{optimal}}{x_{optimal}} \qquad (4)$$

This mapping of buffer space needed for a given "CDV tolerance" minimises the risk that the UPC will reject cells for which there is insufficient buffer space and available bandwidth.

The operation of the present invention is illustrated schematically in Figure 2 of the accompanying drawings. A traffic source 20, is linked via an optical fibre to an ATM link 25. Traffic is monitored by means of a traffic monitor unit 21, which may include a leaky-bucket counter, either dedicated to traffic source 20, or time shared between traffic source 20 and other traffic sources, not shown. Data store 22, contains data defining the functional relationship between buffer space and bandwidth, illustrated in Figure 3. The contents of data store 22 may be updated by information derived from the traffic monitor 21 after it has been processed by processor unit 23. Processor unit 23 calculates optimal bandwidth and buffer space to be assigned to traffic source 20 and feeds this data to control unit 24. Control unit 24 defines a UPC to be used by traffic source 20 and transmits this to traffic source 20 on call set up. Data on bandwidth assignment and buffer space requirements for traffic source 20 are also transmitted to ATM link 25, where the control signals are utilised to assign the appropriate buffer space and bandwidth to traffic source 20. The traffic monitors, of which 21 is an example, may be used to determine the total bandwidth demand on the ATM link at any given time, and data store 22 may hold details of currently available buffer space. Both these parameters can be made available to processor unit 23 for use in the determination of the optimal bandwidth and bufferspace to be assigned to traffic source 20, on call set up.

**Claims**

1. An apparatus for allocating bandwidth and buffer space to each of a plurality of traffic streams, carried by an ATM network (17), each traffic stream having a traffic level associated therewith, said apparatus comprising:

    processor means (23) for determining values for buffer space and bandwidth to be assigned to each traffic stream on call set up, and control means (24) for assigning bandwidth and buffer space to each traffic stream in dependence on signals received from said processor means (23) and containing data representing said values, wherein said processor means (23) is adapted to operate on a predetermined functional relationship between bandwidth and buffer space, together with current values for total available buffer space and bandwidth in said ATM network (17), and the control means (24) is adapted to transmit data to the ATM network (17) for assigning bandwidth and buffer space to a traffic source (20) on call set up.

2. Apparatus, as claimed in claim 1, **characterised in that** said control means (24) assigns buffer space and bandwidth to said traffic streams on a dynamic basis determined by variations in traffic level received by the ATM network (17) from said different traffic streams.

3. Apparatus, as claimed in claim 2, **characterised in that** said processor means (23) calculates tolerance parameters used to control traffic behaviour in traffic sources connected to said ATM network (17).

4. Apparatus, as claimed in any previous claim, **characterised in that** said predetermined functional relationship is derived from measurements made by a leaky bucket counter located in an ATM control node in said ATM network (17).

5. Apparatus, as claimed in claim 4, **characterised in that** said predetermined functional relationship is measured by:

    - measuring, for each ATM traffic stream, a cell delay variation (CDV) tolerance for a plurality of cell rates by means of said leaky bucket counter; and

    - multiplying said CDV tolerance by a corresponding cell rate to derive a corresponding buffer requirement.

6. Apparatus, as claimed in claim 5, **characterised in that** each of said plurality of traffic streams has a leaky bucket counter connected thereto and said predetermined functional relationship is determined by measurements which are performed, and processed in parallel, on said plurality of traffic streams.

7. Apparatus, as claimed in claim 5, **characterised in that** each of said plurality of traffic streams is connected to a single leaky bucket counter and said predetermined functional relationship is determined by measurements performed, and processed, sequentially on each of said plurality of traffic streams.

8. Apparatus, as claimed in any previous claim **characterised in that** said processor means (23) is adapted to determine optimal values for bandwidth and buffer space to be assigned to each of said plurality of traffic streams by determining an intersection between a graph of said predetermined functional relationship between bandwidth and buffer space, and a straight line graph intersecting the origin and a point ($x_{max}$, $y_{max}$), where $x_{max}$ , $y_{max}$ are the maximum available buffer space and bandwidth for an ATM link to (14, 25) which said traffic stream is connected.

**9.** Apparatus, as claimed in claim 8, **characterised in that** said ATM network (17) utilises statistical multiplexing, and **in that** said processor means (23) allocates, between said plurality of traffic streams, more bandwidth and buffer space than actually exists within said network (17).

**10.** Apparatus, as claimed in any previous claim, **characterised in that**, for each of said plurality of traffic streams, said processor means (23) configures a UPC and derives a CDV tolerance parameter by dividing an optimal value for buffer space by a corresponding bandwidth, so that rejection of cells by said UPC is minimised.

**11.** An ATM network carrying a plurality of traffic streams, **characterised in that** said ATM network (17) includes apparatus as claimed in any previous claim.

**12.** A method of allocating buffer space and bandwidth, on call set up, to each of a plurality of traffic streams, carried by an ATM network (17), each traffic stream having a traffic level associated therewith, said method comprising the steps of:

deriving, from a predetermined functional relationship between bandwidth and buffer space, together with current values for total available buffer space and bandwidth in said ATM network (17), data for assigning bandwidth and buffer space to each traffic stream, and assigning bandwidth and buffer space to each traffic stream in dependence on said data.

**13.** A method, as claimed in claim 12, **characterised by** assigning buffer space and bandwidth to said traffic streams on a dynamic basis determined by variations in traffic level received by the ATM network from said different traffic streams.

**14.** A method, as claimed in claim 13 **characterised by** determining tolerance parameters for controlling traffic behaviour in traffic sources (1-4, 20) connected to said ATM network (17) and assigning said tolerance values to said traffic sources (1-4, 20).

**15.** A method, as claimed in any of claims 12 to 14, **characterised by** determining said predetermined functional relationship from measurements made by a leaky bucket counter located in an ATM control node in said ATM network (17).

**16.** A method, as claimed in claim 15, **characterised by** implementing the following steps for measuring said predetermined functional relationship:

-    measuring, for each ATM traffic stream, a cell delay variation (CDV) tolerance for a plurality of cell speeds by means of said leaky bucket counter; and

-    multiplying said CDV tolerance by a corresponding cell speed to derive a corresponding buffer requirement.

**17.** A method, as claimed in claim 16, **characterised by** assigning a leaky bucket counter to each of said plurality of traffic streams and determining said predetermined functional relationship by simultaneously performing measurements on each of said plurality of traffic streams.

**18.** A method, as claimed in claim 16, **characterised by** sequentially determining said predetermined functional relationship for each of said plurality of traffic streams by measurements performed sequentially on each of said plurality of traffic streams.

**19.** A method, as claimed in any of claims 12 to 17, **characterised by** determining values for bandwidth and buffer space to be assigned to each of said plurality of traffic streams by determining an intersection between a graph of said predetermined functional relationship between bandwidth and buffer space, and a straight line graph intersecting the origin and a point ($x_{max}$, $y_{max}$), where $x_{max}$, $y_{max}$ are the maximum available buffer space and bandwidth for an ATM link to (14, 25) which said traffic stream is connected.

**20.** A method, as claimed in claim 19, **characterised in that** said ATM network (17) utilises statistical multiplexing and by allocating, between said plurality of traffic streams, more bandwidth and buffer space than actually exist within said ATM network (17).

**21.** A method, as claimed in any of claims 12 to 20, **characterised by**, for each of said plurality of traffic streams, configuring a UPC and deriving a CDV tolerance parameter by dividing a value for buffer space by a corresponding bandwidth, so that rejection of cells by said UPC are minimised,

**Patentansprüche**

**1.** Vorrichtung zum Zuweisen von Bandbreite und Pufferraum an jeden einer Anzahl von Verkehrsströmen, ausgeführt durch ein ATM-Netzwerk (17), wobei jeder Verkehrsstrom einen ihm zugewiesenen Verkehrspegel hat, wobei die Vorrichtung aufweist:

eine Prozessoreinrichtung (23) zum Bestimmen von Werten für Pufferraum und Bandbreite, die jedem Verkehrsstrom bei Verbindungsaufbau zuzuweisen sind, und eine Steuerungseinrichtung (24) zum Zuweisen von Bandbreite und Pufferraum zu jedem Verkehrsstrom in Abhängigkeit von Signalen, die von der Prozessoreinrichtung (23) empfangen worden sind und die Daten enthalten, welche die Werte repräsentieren, wobei die Prozessoreinrichtung (23) so ausgebildet ist, dass sie mit einer vorbestimmten funktionellen Beziehung zwischen Bandbreite und Pufferraum arbeitet, zusammen mit Stromwerten für im ATM-Netzwerk (17) gesamt zur Verfügung stehenden Pufferraum und Bandbreite, und die Steuerungseinrichtung (24) so ausgebildet ist, dass sie Daten auf das ATM-Netzwerk (17) übertragen kann, um einer Verkehrsquelle (20) beim Verbindungsaufbau Bandbreite und Pufferraum zuzuweisen.

**2.** Vorrichtung nach Anspruch 1, **dadurch gekennzeichnet, dass** die Steuerungseinrichtung (24) den Verkehrsströmen Pufferraum und Bandbreite auf einer dynamischen Basis zuweist, bestimmt durch Änderungen im Verkehrspegel, die vom ATM-Netzwerk (17) von den verschiedenen Verkehrsströmen empfangen werden.

**3.** Vorrichtung nach Anspruch 2, **dadurch gekennzeichnet, dass** die Prozessoreinrichtung (23) Toleranzparameter berechnet, die dazu verwendet werden, das Verkehrsverhalten in mit dem ATM-Netzwerk (17) verbundenen Verkehrsquellen zu steuern.

**4.** Vorrichtung nach einem der vorstehenden Ansprüche,
**dadurch gekennzeichnet, dass** die vorbestimmte funktionelle Beziehung aus Messungen abgeleitet ist, die durch einen "leaky bucket"-Zähler erfolgt sind, der in einem ATM-Steuerknoten in dem ATM-Netzwerk (17) liegt.

**5.** Vorrichtung nach Anspruch 4, **dadurch gekennzeichnet, dass** die vorbestimmte funktionelle Beziehung gemessen wird durch:

- Messen für jeden ATM-Verkehrsstrom eine Zellenverzögerungsänderungs-(CDV)-Toleranz für eine Anzahl von Zellenraten mittels des "leaky bucket"-Zählers; und
- Multiplizieren der CDV-Toleranz mit einer entsprechenden Zellrate, um eine entsprechende Pufferanforderung abzuleiten.

**6.** Vorrichtung nach Anspruch 5, **dadurch gekennzeichnet, dass** jeder der Anzahl von Verkehrsströmen einen "leaky bucket"-Zähler angeschlossen hat, und die vorbestimmte funktionelle Beziehung durch die Messungen bestimmt ist, welche parallel an der Anzahl von Verkehrsströmen durchgeführt und bearbeitet werden.

**7.** Vorrichtung nach Anspruch 5, **dadurch gekennzeichnet, dass** jeder der Anzahl von Verkehrsströmen an einen einzelnen "leaky bucket"-Zähler angeschlossen ist und die vorbestimmte funktionelle Beziehung durch Messungen bestimmt ist, die sequentiell in jedem der Anzahl von Verkehrsströmen durchgeführt und verarbeitet werden.

**8.** Vorrichtung nach einem der vorstehenden Ansprüche,
**dadurch gekennzeichnet, dass** die Prozessoreinrichtung (23) so ausgebildet ist, dass sie die optimalen Werte für Bandbreite und Pufferraum bestimmen kann, die jedem der Anzahl von Verkehrsströmen zuzuweisen sind, indem ein Schnittpunkt bestimmt wird zwischen der grafischen Darstellung der vorbestimmten funktionellen Beziehung zwischen Bandbreite und Pufferraum und einer geraden Linie, die durch den Nullpunkt und einen Punkt

($x_{max}$, $y_{max}$) geht, wobei $x_{max}$, $y_{max}$ der maximal zur Verfügung stehende Pufferraum und die maximal zur Verfügung stehende Bandbreite für eine ATM-Zwischenleitung (14, 25) sind, mit der der Verkehrsstrom verbunden ist.

9. Vorrichtung nach Anspruch 8, **dadurch gekennzeichnet, dass** das ATM-Netzwerk (17) ein statistisches Multiplexen verwendet und dass die Prozessoreinrichtung (23) zwischen der Anzahl von Verkehrsströmen mehr Bandbreite und Pufferraum zuweist als tatsächlich innerhalb des Netzwerkes (17) existiert.

10. Vorrichtung nach einem der vorstehenden Ansprüche,
**dadurch gekennzeichnet, dass** die Prozessoreinrichtung (23) für jeden der Anzahl von Verkehrsströmen einen UPC konfiguriert und einen CDV-Toleranzparameter durch Teilen eines optimalen Wertes für den Pufferraum durch eine entsprechende Bandbreite ableitet, sodass die Zurückweisung von Zellen durch den UPC minimiert ist.

11. ATM-Netzwerk das eine Anzahl von Verkehrsströmen trägt,
**dadurch gekennzeichnet, dass** das ATM-Netzwerk (17) eine Vorrichtung wie nach einem der vorstehenden Ansprüche beansprucht aufweist.

12. Verfahren zum Zuweisen von Pufferraum und Bandbreite bei Verbindungsaufbau zu jedem einer Anzahl von Verkehrsströmen, durchgeführt durch ein ATM-Netzwerk (17), wobei jeder Verkehrsstrom einen zugewiesenen Verkehrspegel hat, wobei das Verfahren die Schritte aufweist:

Ableiten von Daten zum Zuweisen von Bandbreite und Pufferraum zu jedem Verkehrsstrom und Zuweisen von Bandbreite und Pufferraum zu jedem Verkehrsstrom aus einer vorbestimmten funktionellen Beziehung zwischen Bandbreite und Pufferraum zusammen mit Stromwerten für den insgesamt zur Verfügung stehenden Pufferraum und die insgesamt zur Verfügung stehende Bandbreite in dem ATM-Netzwerk (17) und Zuweisen der Bandbreite und des Pufferraums zu jedem Verkehrsstrom in Abhängigkeit von den Daten.

13. Verfahren nach Anspruch 12, **gekennzeichnet durch** Zuweisen von Pufferraum und Bandbreite zu den Verkehrsströmen auf einer dynamischen Basis, bestimmt **durch** Änderungen in dem Verkehrspegel, die **durch** das ATM-Netzwerk von den verschiedenen Verkehrsströmen empfangen werden.

14. Verfahren nach Anspruch 13, **gekennzeichnet durch** Bestimmen von Toleranzparametem für die Steuerung des Verkehrsverhaltens in Verkehrsquellen (1-4, 20), die mit dem ATM-Netzwerk (17) verbunden sind und Zuweisen der Toleranzwerte zu den Verkehrsquellen (1-4, 20).

15. Verfahren nach einem der Ansprüche 12 bis 14, **gekennzeichnet durch** Bestimmen der vorbestimmten funktionellen Beziehung aus Messungen die **durch** einen "leaky bucket"-Zähler gemacht sind, der in einem ATM-Steuerknoten in dem ATM-Netzwerk (17) liegt.

16. Verfahren nach Anspruch 15, **gekennzeichnet durch** Implementieren der folgenden Schritte zum Messen der vorbestimmten funktionellen Beziehung:

- Messen einer Zellverzögerungsänderungs-(CDV)-Toleranz für eine Anzahl von Zellgeschwindigkeiten mittels des "leaky bucket"-Zählers für jeden ATM-Verkehrsstrom; und
- Multiplizieren der CDV-Toleranz mit einer entsprechenden Zellengeschwindigkeit, um eine entsprechende Pufferanforderung abzuleiten.

17. Verfahren nach Anspruch 16, **gekennzeichnet durch** Zuweisen eines "leaky bucket"-Zählers zu jedem der Anzahl von Verkehrsströmen und Bestimmen der vorbestimmten funktionellen Beziehung **durch** gleichzeitiges Durchführen der Messungen an jedem der Anzahl von Verkehrsströmen.

18. Verfahren nach Anspruch 16, **gekennzeichnet durch** sequentielles Bestimmen der vorbestimmten funktionellen Beziehung für jeden der Anzahl von Verkehrsströmen **durch** Messungen, die sequentiell an jedem der Anzahl von Verkehrsströmen durchgeführt werden.

19. Verfahren nach einem der Ansprüche 12 bis 17, **gekennzeichnet durch** Bestimmen von Werten für Bandbreite und Pufferraum, die jedem der Anzahl von Verkehrsströmen zuzuweisen sind **durch** Bestimmen eines Schnittpunktes einer grafischen Darstellung der vorbestimmten funktionellen Beziehung zwischen Bandbreite und Pufferraum und einer Geraden, die **durch** den Nullpunkt und einen Punkt ($x_{max}$, $y_{max}$) geht, wobei $x_{max}$, $y_{max}$ der

maximal zur Verfügung stehende Pufferraum und die maximal zur Verfügung stehende Bandbreite für eine ATM-Zwischenleitung (14, 25) sind, mit der der Verkehrsstrom verbunden ist.

20. Verfahren nach Anspruch 19, **dadurch gekennzeichnet, dass** das ATM-Netzwerk (17) statistisches Multiplexen benutzt und durch Zuweisen zwischen der Anzahl von Verkehrsströmen mehr Bandbreite und Pufferraum als tatsächlich innerhalb des ATM-Netzwerkes (17) existiert.

21. Verfahren nach einem der Ansprüche 12 bis 20, **gekennzeichnet durch** Konfigurieren für jeden der Anzahl von Verkehrsströmen eines UPC und Ableiten eines CDV-Toleranzparameters **durch** Teilen eines Wertes für den Pufferraum **durch** eine entsprechende Bandbreite, sodass die Zurückweisung von Zellen **durch** den UPC minimiert ist.

**Revendications**

1. Appareil pour allouer une largeur de bande et un espace tampon à chacun d'une pluralité de courants de trafic, acheminés par un réseau ATM (17), chaque courant de trafic possédant un niveau de trafic associé, ledit appareil comprenant :

   un processeur (23) pour déterminer des valeurs pour l'espace tampon et la largeur de bande à attribuer à chaque courant de trafic lors de l'établissement d'une communication, et un moyen de commande (24) pour attribuer une largeur de bande et un espace tampon à chaque courant de flux en fonction des signaux reçus depuis ledit processeur (23) et contenant des données représentant lesdites valeurs, dans lequel ledit processeur (23) est adapté pour fonctionner selon un asservissement prédéterminé entre la largeur de bande et l'espace tampon, conjointement avec les valeurs actuelles de l'espace tampon et de la largeur de bande totaux disponibles dans ledit réseau ATM (17), et le moyen de commande (24) est adapté pour transmettre des données au réseau ATM (17) afin d'attribuer une largeur de bande et un espace tampon à une source de trafic (20) lors de l'établissement d'une communication.

2. Appareil, selon la revendication 1, **caractérisé en ce que** ledit moyen de commande (24) attribue un espace tampon et une largeur de bande aux dits courants de trafic sur une base dynamique déterminée par des variations dans le niveau de trafic reçu par le réseau ATM (17) depuis lesdits différents courants de trafic.

3. Appareil, selon la revendication 2, **caractérisé en ce que** ledit processeur (23) calcule des paramètres de tolérance utilisés pour commander un comportement du trafic dans des sources de trafic connectées au dit réseau ATM (17).

4. Appareil, selon l'une quelconque des revendications précédentes, **caractérisé en ce que** ledit asservissement prédéterminé est dérivé des mesures réalisées par un compteur de type leaky bucket localisé dans un noeud de commande ATM dans ledit réseau ATM (17).

5. Appareil, selon la revendication 4, **caractérisé en ce que** ledit asservissement prédéterminé est mesuré en :

   mesurant, pour chaque courant de trafic ATM, une tolérance de variation du retard des cellules (CDV) pour une pluralité de taux de cellule au moyen dudit compteur de type leaky bucket ; et
   multipliant ladite tolérance de CDV par un taux de cellule correspondant afin de dériver une exigence de tampon correspondante.

6. Appareil, selon la revendication 5, **caractérisé en ce que** chacun de ladite pluralité de courants de trafic possède un compteur de type leaky bucket connecté à ce dernier et **en ce que** ledit asservissement prédéterminé est déterminé par des mesures réalisées, et traitées en parallèle, sur ladite pluralité de courants de trafic.

7. Appareil selon la revendication 5, **caractérisé en ce que** chacun de ladite pluralité de courants de trafic est connecté à un seul compteur de type leaky bucket et **en ce que** ledit asservissement prédéterminé est déterminé par des mesures réalisées, et traitées, de façon séquentielle sur chacun de ladite pluralité de courants de trafic.

8. Appareil, selon l'une quelconque des revendications précédentes, **caractérisé en ce que** ledit processeur (23) est adapté pour déterminer des valeurs optimales pour la largeur de bande et l'espace tampon à attribuer à chacun de ladite pluralité de courants de trafic en déterminant une intersection entre un graphique dudit asservissement prédéterminé entre la largeur de bande et l'espace tampon, et un graphique en ligne droite croisant l'origine et un point $(X_{MAX}, Y_{MAX})$, où $X_{MAX}$, $Y_{MAX}$ représentent le maximum disponible d'espace tampon et de largeur de bande pour une liaison ATM (14, 25) à laquelle est connecté ledit courant de trafic.

9. Appareil, selon la revendication 8, **caractérisé en ce que** ledit réseau ATM (17) utilise un multiplexage statistique, et **en ce que** ledit processeur (23) attribue, entre ladite pluralité de courants de trafic, plus de largeur de bande et d'espace tampon qu'il n'en existe réellement dans ledit réseau (17).

10. Appareil, selon l'une quelconque des revendications précédentes, **caractérisé en ce que**, pour chacun de ladite pluralité de courants de trafic, ledit processeur (23) configure une UPC et dérive un paramètre de tolérance de CDV en divisant une valeur optimale pour un espace tampon par une largeur de bande correspondante, de façon à minimiser le rejet de cellules par ladite UPC.

11. Réseau ATM acheminant une pluralité de courants de trafic, **caractérisé en ce que** ledit réseau ATM (17) comprend un appareil tel que décrit dans l'une quelconque des revendications précédentes.

12. Procédé d'attribution d'espace tampon et de largeur de bande, lors de l'établissement d'une communication, à chacun d'une pluralité de courants de trafic, acheminés par un réseau ATM (17), chaque courant de trafic possédant un niveau de trafic associé, ledit procédé comprenant les étapes consistant à :

   dériver, à partir d'un asservissement prédéterminé entre la largeur de bande et l'espace tampon, conjointement avec des valeurs actuelles de l'espace tampon et de la largeur de bande totales disponibles dans ledit réseau ATM (17), des données pour attribuer une largeur de bande et un espace tampon à chaque courant de trafic, et pour attribuer une largeur de bande et un espace tampon à chaque courant de trafic en fonction desdites données.

13. Procédé, selon la revendication 12, **caractérisé par** l'attribution de l'espace tampon et de la largeur de bande aux dits courants de trafic sur une base dynamique déterminée par des variations dans le niveau de trafic reçu par le réseau ATM depuis lesdits différents courants de trafic.

14. Procédé, selon la revendication 13, **caractérisé par** la détermination de paramètres de tolérance pour commander le comportement du trafic dans des sources de trafic (1 à 4, 20) connectées au dit réseau ATM (17) et l'attribution desdites valeurs de tolérance aux dites sources de trafic (1 à 4, 20).

15. Procédé, selon l'une quelconque des revendications 12 à 14, **caractérisé par** la détermination dudit asservissement prédéterminé à partir de mesures réalisées par un compteur de type leaky bucket localisé dans un noeud de commande ATM dans ledit réseau ATM (17).

16. Procédé, selon la revendication 15, **caractérisé par** l'implémentation des étapes suivantes pour mesurer ledit asservissement prédéterminé :

   mesurer pour chaque courant de trafic ATM, une tolérance de variation du retard des cellules (CDV) pour une pluralité de vitesses de cellule au moyen dudit compteur de type leaky bucket ; et
   multiplier ladite tolérance de CDV par une vitesse de cellule correspondante afin de dériver une exigence de tampon correspondante.

17. Procédé, selon la revendication 16, **caractérisé par** l'affectation d'un compteur de type leaky bucket pour chacun de ladite pluralité de courants de trafic et la détermination dudit asservissement prédéterminé en réalisant simultanément des mesures sur chacun de ladite pluralité de courants de trafic.

18. Procédé, selon la revendication 16, **caractérisé par** la détermination de façon séquentielle dudit asservissement prédéterminé pour chacun de ladite pluralité de courants de trafic par des mesures réalisées de façon séquentielle sur chacun de ladite pluralité de courants de trafic.

19. Procédé, selon l'une quelconque des revendications 12 à 17, **caractérisé par** la détermination des valeurs pour la largeur de bande et l'espace tampon à attribuer à chacun de ladite pluralité de courants de trafic en déterminant une intersection entre un graphique dudit asservissement prédéterminé entre la largeur de bande et un espace tampon, et un graphique en ligne droite croisant l'origine et un point $(X_{MAX}, Y_{MAX})$, où $X_{MAX}$, $Y_{MAX}$ représentent le maximum disponible d'espace tampon et de largeur de bande pour une liaison ATM (14, 25) à laquelle est connecté ledit courant de trafic.

20. Procédé, selon la revendication 19, **caractérisé en ce que** ledit réseau ATM (17) utilise un multiplexage statistique et par l'attribution, entre ladite pluralité de courants de trafic, de plus de largeur de bande et d'espace tampon qu'il n'en existe réellement dans ledit réseau ATM (17).

21. Procédé, selon l'une quelconque des revendications 12 à 20, **caractérisé par**, pour chacun de ladite pluralité de courants de trafic, la configuration d'une UPC et de la dérivation d'un paramètre de tolérance de CDV en divisant une valeur pour l'espace tampon par une largeur de bande correspondante, de façon à minimiser le rejet de cellules par ladite UPC.

Fig.1

1　　2　　3　　4

9　　10　　11　　12

13

5　　6　　7　　8

ATM Link

14

17

ATM Network

16

Fig.2

Fig.3

Buffer Requir.
(cells)

1,2e+3
1,0e+3
8,0e+2
6,0e+2
4,0e+2
2,0e+2
0,0e+0

0,0e+0    5,0e-2    1,0e-1    1,5e-1    2,0e-1    2,5e-1    3,0e-1    3,5e-1

Fraction of link capacity